Europäisches Patentamt

European Patent Office

Office européen des brevets

(19)

(11) Numéro de publication: **0 117 199**
**A1**

(12) **DEMANDE DE BREVET EUROPEEN**

(21) Numéro de dépôt: **84400299.8**

(22) Date de dépôt: **14.02.84**

(51) Int. Cl.³: **F 16 K 31/58**

(30) Priorité: **15.02.83 FR 8302416**

(43) Date de publication de la demande:
**29.08.84 Bulletin 84/35**

(84) Etats contractants désignés:
**AT BE DE GB IT NL SE**

(71) Demandeur: **Peyrat, Jacques**
**I Allèe des Vignes Greffiers**
**F-78120 Rambouillet(FR)**

(72) Inventeur: **Peyrat, Jacques**
**I Allèe des Vignes Greffiers**
**F-78120 Rambouillet(FR)**

(54) **Robinetterie à commande du débit par le bec.**

(57) Systéme de robinetterie de puisage applicable aux fluides sous pression, notamment à l'eau.

Il comprend un corps fixe (7) dont une excroissance constitue le manchon de raccordement, (2), et un bec déverseur (5) mobile dont les mouvements commandent directement l'arret et la régulation du débit délivré.

L'invention peut être utilisée pour la fabrication de tout robinet de puisage, notamment sanitaire, sous la forme de robinets simples ou de mitigeurs.

EP 0 117 199 A1

./...

FIG. 2

I · 0117199

La présente invention concerne un systéme de robinetterie de puisage dont le mécanisme régulateur de débit est
commandé directement par le mouvement du bec déverseur.

Les robinets de puisage actuellement en usage comportent, selon la terminologie de la Norme Française D I8 OOI,
les parties principales suivantes:

- un about de raccordement
- un corps muni d'un bec ( ou nez )
- une tête, constituant l'organe régulateur de débit
- un ou des organes de manoeuvre, commandant les
  mouvements de la tête

La tête peut être du type dit à soupape, à boisseau,
à disques céramique ou autre. Cette conception conduit à un
nombre élevé de piéces distinctes.

Le systéme selon l'invention réduit substantiellement
le nombre de piéces necessaires; il élimine toute partie mobile dans le fluide de même que le presse étoupe. Ainsi, une
robinetterie mitigeuse bain douche par exemple, ne comportera que deux piéces principales, l'une constituant le corps
et l'about de raccordement, l'autre étant à la fois le bec
et l'organe de manoeuvre.

Un mode de réalisation concernant un robinet distribuant un seul fluide est illustré par la figure I. on y voit:

- le corps (I) muni d'un about de raccordement (2),
  percé d'un canal (3) acheminant le fluide sous
  pression.
- le bec (5) percé d'un canal (6) distribuant le fluide à l'appareil desservi.

Dans la position de la figure I, le robinet est fermé.
Un mouvement de traction dans le sens de la fléche, imprimé
au bec par l'utilisateur, amène l'orifice de sortie (6) face
à une rainure de section triangulaire et de profondeur croissante vers la droite usinée dans le corps. Ainsi le débit
délivré augmente progressivement avec le déplacement du bec
La fermeture s'obtient par le mouvement inverse.

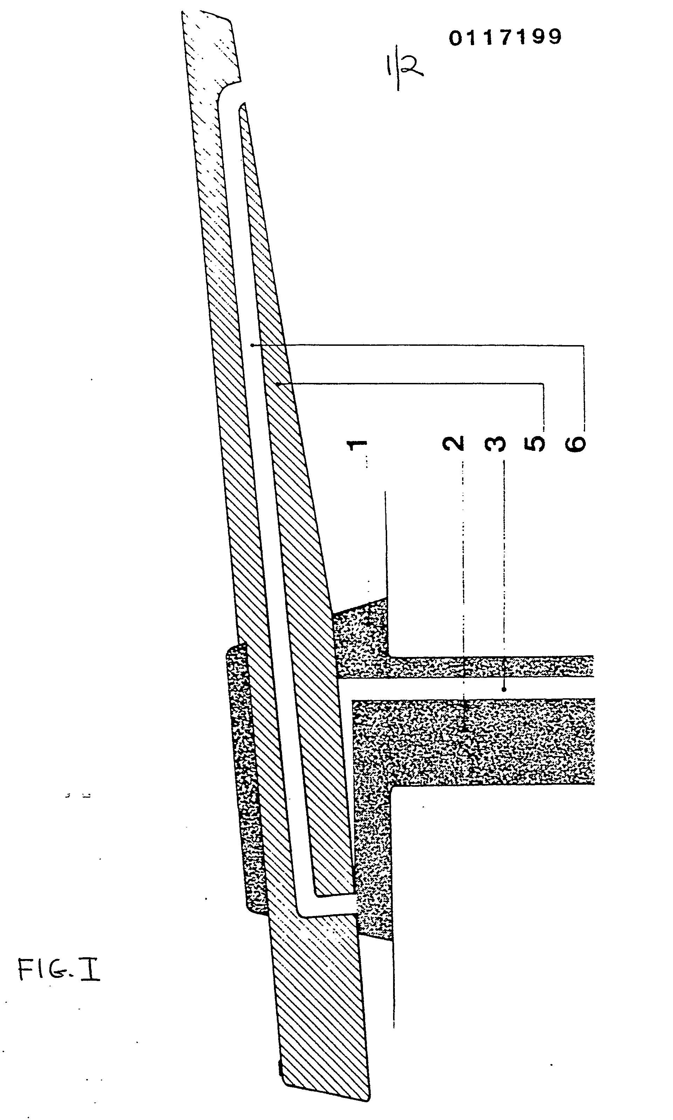

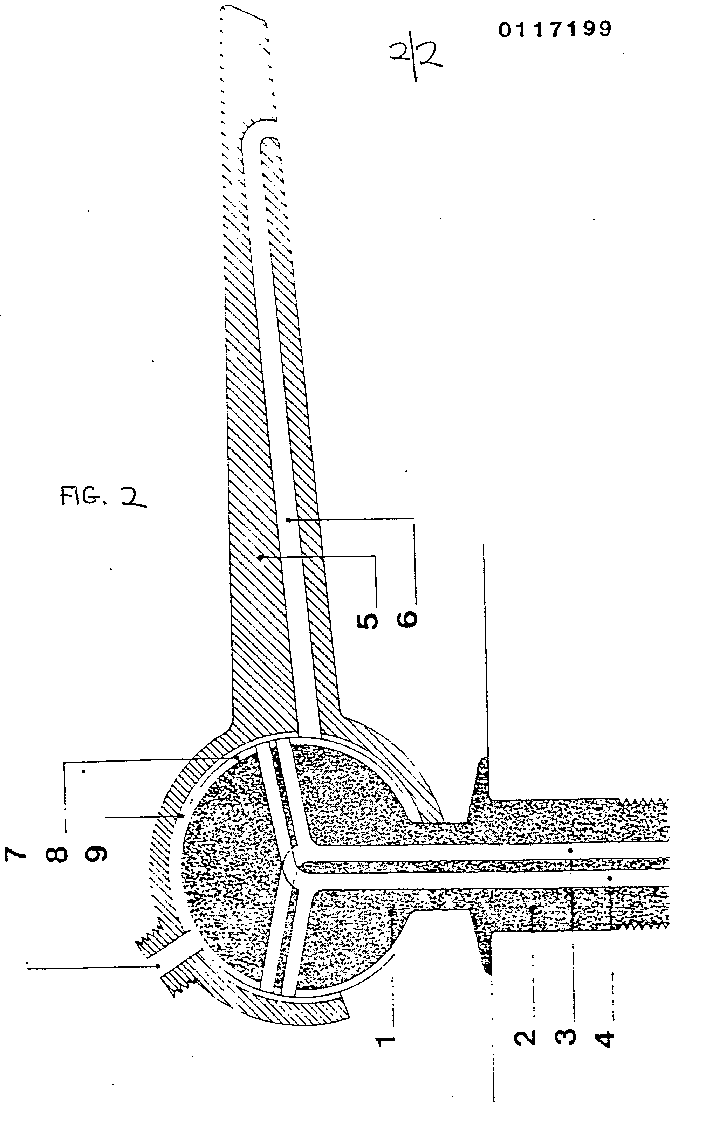

Un mode de réalisation, concernant un mitigeur bain-douche, est illustré par la figure 2. On y voit:

- le corps, cylindrique (I) muni d'un about de raccordement (2), percé de canaux acheminant l'eau froide (3)

- le bec (5) percé de canaux distribuant l'eau froide, chaude ou mitigée soit à la baignoire (6) soit
  à la douche (7)
- des manchons en P.T.F.E. moulés l'un sur le corps
  (8), l'autre sur le bec (9), assurant l'étancheité.

Dans la position de la figure 2 le robinet est fermé. Un mouvement vers le haut imprimé au bec par l'utilisateur, amène successivement l'orifice de sortie vers la baignoire face à:

- l'arrivée d'eau froide (3) seule
- les arrivées d'eau froide et chaude
- l'arrivée d'eau chaude (4) seule.

La poursuite du mouvement vers le haut referme la sortie baignoire puis améne l'orifice de sortie vers la douche (7) successivement face à:

- l'arrivée d'eau froide (3) seule
- les arrivées d'eau froide et chaude
- l'arrivée d'eau chaude (4) seule.

Le mouvement inverse referme successivement les sorties douche puis baignoire.

Il est à noter que ce systéme, à partir de la position de la figure, ne permet pas d'alimenter la douche en premier, ce qui va dans le sens de la sécurité des usagers.

L'étancheité du mécanisme peut être obtenue, comme indiqué sur la figure, par glissement à frottements doux de manchons en P.T.F.E. Elle peut l'être par tout autre moyen tel que par exemple des plaquettes en céramique solidaires l'une du corps l'autre du bec, des pastilles élastiques, etc...

Le corps et le bec de manoeuvre peuvent être réalisés en divers matériaux tels que bronze, laiton, acier inoxydable ou matiéres plastiques.

Le système de robinetterie selon l'invention est applicable à tout robinet de puisage, notamment sanitaire, simple ou mitigeur.

R E V E N D I C A T I O N S            0117199

I - Mécanisme applicable aux robinets de puisage simples
et aux robinets mitigeurs, qu'ils soient ou non inverseurs, caractérisé en ce que son fonctionnement
ne requiert, hormis d'éventuels joints d'étancheité,
que deux pièces seulement constituées ainsi :

. une première pièce. le corps (I), est un cylindre
ou un secteur cylindrique d'axe horizontal perpendiculaire à l'about de raccordement (?) dont il est
solidaire ; le ou les fluides à distribuer pénètrent
dans le corps par un ou des canaux percés dans l'about (3 & 4) ; il ou ils en sortent par une ou des
lumières sises à la périphérie du cylindre.

. une seconde pièce. le bec déverseur (5), percée
d'une cavité cylindrique, enveloppe totalement ou
partiellement le corps (I) en sorte qu'elle puisse
tourner à frottement doux autour du cylindre de ce
corps et éventuellement coulisser parallélement à
son axe ; cette pièce est percée d'une ou plusieurs
lumières (6 & 7), communiquant avec l'orifice déverseur, que le mouvement de rotation amène en coïncidence avec celles du corps (I) commandant ainsi
l'arret ou le débit du ou des fluides , le coulissement permettant de façon indépendante le réglage
du débit déversé grâce à une découpe appropriée
des lumières.

2.- Mécanisme de robinetterie selon la revendication
Nº I, caractérisé en ce que l'étancheité est obtenue par le moyen d'un ou de deux manchons (8 & 9),
. dont l'un au moins en P.T.F.E., solidaires l'un du
corps fixe et, s'il y en a deux, l'autre du bec
déverseur mobile.

FIG.I

1

2

3

5

6

0117199

7

8

9

FIG. 2

5

6

1

2

3

4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | WO-A-8 000 739 (BRANDELLI) * Page 1, ligne 13 - page 2, ligne 12; page 3, ligne 32 - page 4, ligne 12; figures 1,2 * | 1 | F 16 K 31/58 |
| X | BE-A- 742 462 (PRYDE INCORPORATED) * Page 6, lignes 15-22; page 14, ligne 24 - page 15, ligne 14; figures 1,2,4,5,8 * | 1 | |
| X | US-A-3 796 231 (TERENCE G. HARE) * Colonne 2, ligne 32 - colonne 4, ligne 24; figures 1,2 * | 1,2 | |
| A | US-A-4 043 359 (CHRIST CHRISTO) * Colonne 2, lignes 32-65; colonne 4, lignes 13-30; figures 1,2 * | 1 | DOMAINES TECHNIQUES RECHERCHES (Int. Cl. 3) F 16 K |
| A | US-A-3 056 418 (ARTHUR H. ADAMS) * Colonne 2, lignes 18-40; colonne 4, lignes 23-38; figures 1,2 * | 1 | |
| A | US-A-3 580 091 (LLOYD SPENCER) * Colonne 1, ligne 28 - colonne 2, ligne 2; colonne 2, lignes 17-58; figures 1-3 * | 1 | |

--- -/-

Le présent rapport de recherche a été établi pour toutes les revendications

| Lieu de la recherche | Date d'achèvement de la recherche | Examinateur |
|---|---|---|
| LA HAYE | 25-04-1984 | MARECHAL S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 418 897 (CARPIGIANI)<br>* Page 3, lignes 10-16; page 3, ligne 34 - page 4, ligne 1 * | 1 | |

-----

**DOMAINES TECHNIQUES RECHERCHES (Int. Cl. ³)**

Le présent rapport de recherche a été établi pour toutes les revendications

| Lieu de la recherche | Date d'achèvement de la recherche | Examinateur |
|---|---|---|
| LA HAYE | 25-04-1984 | MARECHAL S. |